# NEUE EUROPÄISCHE PATENTSCHRIFT

(11) **EP 1 337 803 B2**
(45) Veröffentlichungstag und Bekanntmachung des Hinweises auf die Entscheidung über den Einspruch: **01.05.2019**
(45) Hinweis auf die Patenterteilung: 15.08.2012
(21) Anmeldenummer: 01996715.7
(22) Anmeldetag: 07.11.2001
(51) Int. Cl.: G01B 9/02, A61B 3/12, A61B 5/00, G01N 21/45, G02B 23/26, G01N 21/954, G01B 11/24

(54) **INTERFEROMETRISCHE MESSVORRICHTUNG**
INTERFEROMETRIC MEASURING DEVICE
DISPOSITIF DE MESURE INTERFEROMETRIQUE

(30) Priorität: 20.11.2000 DE 10057540
(43) Veröffentlichungstag der Anmeldung: 27.08.2003
(73) Patentinhaber: Taylor Hobson Ltd., Leicester LE4 9JQ (GB)
(72) Erfinder: DRABAREK, Pawel, 75233 Tiefenbronn (DE)
(74) Vertreter: Weilnau, Carsten
(86) Internationale Anmeldenummer: PCT/DE2001/004184
(87) Internationale Veröffentlichungsnummer: WO 2002/040936

(56) Entgegenhaltungen:
- WO-A1-97/32182
- WO-A2-00/42906
- DE-A- 19 808 273
- DE-A- 19 819 762
- DE-A1- 3 834 117
- US-A- 4 627 731
- US-A- 4 652 131
- US-A- 4 848 908
- US-A- 5 157 745
- US-A- 5 588 077
- US-A- 5 640 270
- US-A- 5 731 876

## Beschreibung

### Stand der Technik

Die Erfindung bezieht sich auf eine interferometrische Messvorrichtung zum Messen von Oberflächenkenngrößen, Formen, Abständen, Abstandsänderungen, z.B. Schwingungen, von Messobjekten mit einem Sondenteil.

Eine interferometrische Messvorrichtung dieser Art ist in der DE 198 08 273 A1 angegeben. Bei dieser bekannten Messvorrichtung wird in dem interferometrischen Messsystem mittels Kohärenz-Multiplex das optische System der Messvorrichtung auf zwei Subsysteme aufgeteilt, nämlich ein so bezeichnetes Modulations-Interferometer und einen Sondenteil. Der Sondenteil ist auf diese Weise gut handhabbar und weist einen Messkopf auf, mit dem auch Messungen in relativ langen, engen Bohrungen möglich sind. Die Messvorrichtung ist für eine Mehrwellenlängeninterferometrie ausgelegt, so dass eine Messbereichserweiterung erzielt wird. Um eine Rundum-Abtastung einer Oberfläche durchzuführen, wird in der Regel das Messobjekt selbst oder die Messvorrichtung rotierend angetrieben. Der Antrieb ist nicht immer einfach auszuführen und kann sich negativ auf die Messgenauigkeit auswirken.

US - 5640270 offenbart eine interferometrische Messvorrichtung mit einem rotierbaren Strahlteiler in einem Sonderteil

Bei einer in der DE 198 19 762 A1 gezeigten weiteren interferometrischen Messvorrichtung dieser Art sind verschiedene raumsparende Messsonden für das Messsystem vorgeschlagen, wobei die Erzeugung der Abtastbewegung, mit ähnlichen Schwierigkeiten verbunden sein kann, wie vorstehend angegeben.

Die EP 0 126 475 zeigt ein Verfahren und eine Vorrichtung zum berührungsfreien Messen der Ist-Positionen und/oder des Profils rauher Oberflächen, das auf dem Konzept des Mehrwellenlängen-Heterodyn-Interferometers basiert und als Lichtquelle ein oder mehrere Laser beinhaltet. Die Heterodyntechnik ermöglicht es, auf der Grundlage der Phasenauswertung den Einfluss von Erschütterungen weitgehend zu unterdrücken; jedoch können auch bei dieser Vorgehensweise die vorstehend genannten Schwierigkeiten auftreten.

Der Erfindung liegt die Aufgabe zugrunde, eine interferometrische Messvorrichtung der eingangs genannten Art bereit zu stellen, mit oder bei möglichst einfacher Handhabung der Messvorrichtung eine erhöhte Genauigkeit bei einem rotierenden Abtasten der Oberfläche eines Messobjektes erreicht und Störeinflüssen auf die Messgenauigkeit, die von der Antriebseinrichtung herrühren, entgegen gewirkt wird.

Diese Aufgabe wird mit den Merkmalen des Anspruches 1 gelöst. Hiernach ist vorgesehen, dass der Sondenteil in einen feststehenden Sondenteil und einen mit diesem mechanisch und optisch gekoppelten rotierbaren Sondenteil unterteilt ist und dass ein Strahlteiler zum Erzeugen eines Referenzstrahls und eines Messstrahls für die interferometrische Messung in dem rotierbaren Sondenteil angeordnet ist, wobei der Sondenteil in einem Messkopf zum Abtasten des Messobjektes eine optische Messfaser aufweist, der ein Faserstück vorgeschaltet ist und dass als Strahlteiler eine Trennfläche zwischen dem Faserstück und der Messfaser ausgebildet ist.

Die Unterteilung des Sondenteils in einen feststehenden und einen rotierbaren Sondenteil ermöglicht eine relativ einfache Ausrichtung zum Abtasten des Messobjektes und eine Auslegung des Sondenteils für eine präzise rotierende Abtastung. Die Anordnung des Strahlteilers in dem rotierbaren Sondenteil verhindert, dass sich den zu erfassenden Wegdifferenzen zwischen Referenzstrahl und Messstrahl, die von der zu messenden Oberfläche herrühren, solche Differenzen überlagern, die durch die Rotation am Übergangsbereich zwischen dem feststehenden Sondenteil und dem rotierenden Sondenteil entstehen.

Eine weitere Vereinfachung für die Handhabung ergibt sich durch die Maßnahmen, dass ein von dem Sondenteil räumlich getrenntes Modulationsinterferometer mit darin angeordneter kurzkohärenter Lichtquelle oder räumlich getrenntes Demodulationsinterferometer vorhanden ist, wobei die kurzkohärente Lichtquelle in dem rotierbaren oder in dem feststehenden Sondenteil oder außerhalb des Sondenteils angeordnet ist. Ein günstiger Aufbau wird dabei dadurch erzielt, dass der Sondenteil und das Modulationsinterferometer oder das Demodulationsinterferometer über eine monomode Lichtleitfaser miteinander gekoppelt sind.

Ein vorteilhafter Aufbau wird desweiteren dadurch erreicht, dass der Strahlteiler Teil einer Common-Path-Interferometeranordnung ist. Dadurch werden eigene optische Zweige für den Referenzstrahl entbehrlich und eine schlanke Bauform begünstigt.

Verschiedene, an sich bekannte Alternativen für die Ausführung der Messvorrichtung bestehen darin, dass der Aufbau des Interferometers einem klassischen Interferometer, einem Weißlichtinterferometer oder einem Heterodyninterferometer entspricht.

Eine vorteilhafte Ausgestaltung besteht weiterhin darin, dass das Interferometer zur Erweiterung des Messbereiches als Mehrwellenlängeninterferometer ausgebildet ist.

Für eine Messung in sehr engen Kanälen bzw. Bohrungen, wie z.B. einer Einspritzdüse, wird dadurch ermöglicht, dass der Sondenteil in einem Messkopf zum Abtasten des Messobjektes eine optische Messfaser aufweist, der ein Faserstück vorgeschaltet ist und dass als Strahlteiler eine Trennfläche zwischen dem Faserstück und der Messfaser ausgebildet ist. Beispielsweise sind dabei Messungen in Bohrungen eines Durchmessers zwischen 80 µm und einem mm möglich. Das messobjektseitige Ende der Messfaser ist dabei entsprechend der jeweiligen Messaufgabe ausgebildet.

Zu einem günstigen Aufbau tragen weiterhin die Maßnahmen bei, dass das Licht der Lichtquelle über eine weitere Lichtleitfaser und über einen Faser-Strahlteiler in das Faserstück geführt und aus diesem nach Beleuchten des Messobjektes in die Lichtleitfaser geleitet wird.

Zum Aufbau und der Wirkungsweise der interferometrischen Messvorrichtung an sich wird auf den eingangs genannten Stand der Technik hingewiesen, in dem noch weitere Literaturstellen zu interferometrischen Messvorrichtungen angegeben sind.

Die Erfindung wird nachfolgend anhand von Ausführungsbeispielen unter Bezugnahme auf die Zeichnungen näher erläutert. Es zeigen:
Fig. 1 ein Beispiel einer interferometrischen Messvorrichtung mit einem Modulations-Interferometer und einem davon räumlich getrennten Sondenteit in schematischer Darstellung und
Fig. 2 ein Ausführungsbeispiel einer erfindungsgemäßen interferometrischen Messvorrichtung, bei dem ein Demodulations- Interferometer und ein davon räumlich getrennter Sondenteil vorgesehen sind.

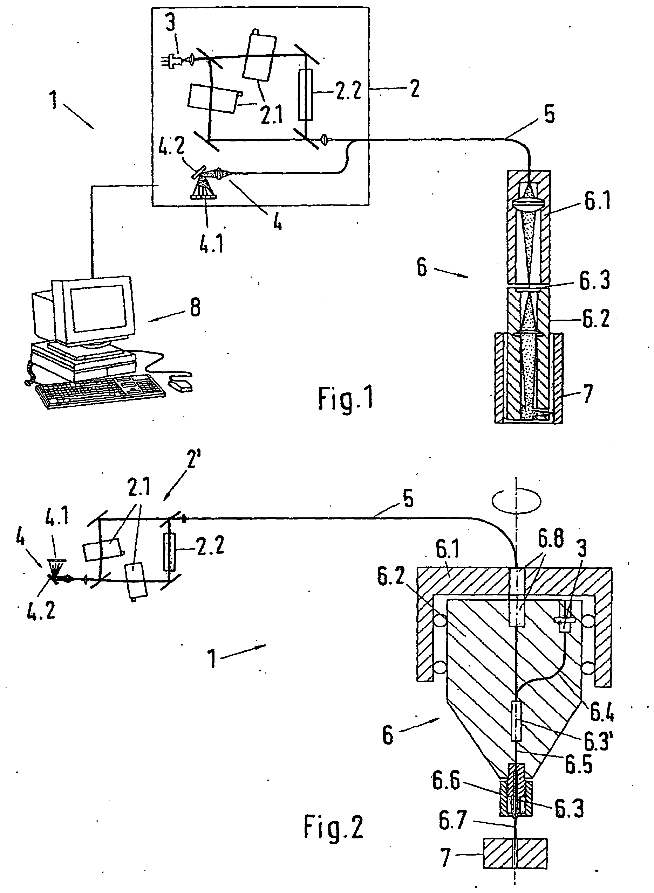

Bei einer in Fig. 1 gezeigten interferometrischen Messvorrichtung 1 sind eine Baueinheit aus einem Modulations-Interferometer 2 und eine Baueinheit mit einem Sondenteil 6 räumlich voneinander getrennt angeordnet und über eine vorzugssweise monomode Lichtleitfaser 5 miteinander verbunden. Zur Aufnahme von Messlicht, das von einer abgetasteten Objektoberfläche eines Messobjektes 7 über die monomode Lichtleitfaser 5 geführt wird, ist eine Empfängeranordnung 4 mit einem Spektralelement 4.2 und einer Photodetektoranordnung 4.1 vorgesehen, deren Ausgangssignale an eine Auswerteeinrichtung 8 zur rechnerischen Auswertung weitergeleitet werden, die im übrigen auch Steuerungsaufgaben der interferometrischen Messvorrichtung 1 übernehmen kann.

Das Modulationsinterferometer umfasst eine kurzkohärente, breitbandige Lichtquelle 3, z.B. eine Superlumineszenzdiode, sowie zwei Modulatoren 2.1, insbesondere akustooptische Modulatoren, ein in einem Zweig angeordnetes Verzögerungselement 2.2, beispielsweise eine planparallele Platte, zwei Strahlteiler, der eine zum Aufteilen des Lichtstrahls in zwei den beiden Modulatoren 2.1 zugeführte Teil-Lichtstrahlen und der andere zum Vereinigen der geteilten Lichtstrahlen, sowie zwei Ablenkelemente. Ein derartiges Modulations-interferometer ist beispielsweise in der eingangs erwähnten DE 198 19 762 A1 angegeben, wobei auch die Wirkungsweise näher beschrieben ist.

Der Sondenteil 6 weist einen feststehenden Sondenteil 6.1 und einen daran mechanisch und optisch angekoppelten rotierbaren Sondenteil 6.2 auf, in dem ein Strahlteiler 6.3 angeordnet ist. Die Anordnung des Strahlteilers 6.3 in dem rotierbaren Sondenteil 6.2 hat den Vorteil, dass sich durch die Rotation keine Wegdifferenzen zwischen dem mit dem Strahlteiler 6.3 erzeugten Referenzstrahl und Messstrahl ergeben können, sondern die entstehenden Änderungen der Wegdifferenz auf die Oberflächeneigenschaften oder Form, Abstand, Abstandsänderung, z.B. Schwingungen, der abgetasteten Oberfläche des Messobjektes 7 zurückzuführen sind.

Das Licht der kurzkohärenten Lichtquelle 3 des Modulations-Interferometers 2 wird mit einer Linse kollimiert und auf die zwei Teil-Lichtstrahlen aufgeteilt. Das Modulations-Interferometer ist z.B. nach dem Prinzip eines Mach-Zehnder-Interferometers aufgebaut. Die beiden Teil-Lichtstrahlen werden mit Hilfe der Modulatoren 2.1 gegenseitig in der Frequenz verschoben. Die Frequenzdifferenz beträgt z.B. einige kHz. In einem Arm des Modulations-Interferometers 2 bewirkt das Verzögerungselement 3 eine Differenz der optischen Wege beider Teil-Lichtstrahlen, die länger als die Kohärenzlänge der Lichtquelle 3 ist. Die beiden Teil-Lichtstrahlen werden in dem nachfolgenden Strahlteiler überlagert und in die monomode Lichtleitfaser 5 eingekoppelt. Aufgrund der optischen Wegdifferenz interferieren die Teil-Lichtstrahlen nicht. Das Licht wird über einen Lichtleiter zum Sondenteil 6 geführt und dort ausgekoppelt.

Der rotierbare Sondenteil 6.2 beinhaltet außer dem Strahlteiler 6.3 weitere optische Elemente, die den zugeführten Lichtstrahl auf die zu vermessende Oberfläche des Messobjektes 7 fokussieren. Der optische Weg von dem Strahlteiler 6.3 zur Messfläche gleicht die in dem Modulations-Interferometer 2 eingebrachte optische Wegdifferenz aus. Mit dem Strahlteiler 6.3 wird der Lichtstrahl in den zu dem Messobjekt geführten Messstrahl und einen Referenzstrahl aufgeteilt. Durch die Rotation des rotierbaren Sondenteils 6.2 wird z.B. die Wand einer Bohrung abgetastet und die Formabweichung des Innenzylinders vermessen. Das dabei von der Messoberfläche reflektierte Licht wird mit dem Referenzstrahl überlagert und in die Lichtleitfaser 5 eingekoppelt. Aufgrund des Wegdifferenzausgleichs können die Lichtstrahlen des Messstrahls und des Referenzstrahls interferieren. Die Licht-Phasendifferenz beinhaltet Informationen über den Abstand zur Messoberfläche.

Das über die Lichtleiterfaser 5 zu dem Modulations-Interferometer 2 geleitete Licht wird ausgekoppelt und mit Hilfe des Spektralelementes 4.2, z.B. eines Gitters oder Prismas, in mehrere spektrale Anteile der Wellenlängen λ₁, λ₂, ... λₙ zerlegt und auf der Photodetektoranordnung 4.1 fokussiert. Jeder Photodetektor liefert ein elektrisches Signal mit der durch die Modulatoren 2.1 erzeugten Differenzfrequenz und einer Phase Δϕ, die mit der Messgröße ΔL des Abstandes zu dem Messobjekt 7 und der zugehörigen Wellenlänge λₙ zusammenhängt gemäß der Beziehung Δϕ = (2●π/λₙ) ● ΔL.

Durch die Vermessung der Phasendifferenzen der Signale mehrerer Photodetektoren (Mehrwellenlängen-Heterodyn-Interferornetrie) lässt sich der Abstand ΔL, der größer als einzelne Lichtwellenlängen sein darf, eindeutig bestimmen. Die Auswertung erfolgt mittels der Auswerteeinrichtung 8.

Grundsätzlich ähnlich wie die in Fig. 1 gezeigte interferometrische Messvorrichtung 1 arbeitet auch die in Fig. 2 gezeigte weitere interferometrische Messvorrichtung 1. Hierbei ist die interferometrische Messvorrichtung 1 jedoch in ein Demodulations-Interferometer 2' und einen davon entfernten, mittels der Lichtleitfaser 5 gekoppelten Sondenteil 6 gekoppelt, der ebenfalls in den feststehenden Sondenteil 6.1 und den rotierbaren Sondenteil 6.2 unterteilt ist.

Die kurzkohärente Lichtquelle 3, z.B. eine Superlumineszenzdiode, befindet sich hierbei in dem rotierbaren Sondenteil 6.2. Ihr Licht wird über eine weitere Lichtleitfaser 6.4, ebenfalls vorzugsweise eine monomode Lichtleitfaser, mittels eines Faser-Strahlteilers 6.3' in ein Faserstück 6.5 eingekoppelt, das mittels eines Faserverbinders in einem Messkopf 6.6 mit einer dem Messobjekt 7 zugekehrten Messfaser 6.7 gekoppelt ist. Mittels der an ihrem freien Ende zum Beleuchten der Messoberfläche und Aufnehmen des davon reflektierten Lichts ausgebildeten Messfaser 6.2 wird die Oberfläche des Messobjektes 7, z.B. eine sehr enge Bohrung einer Einspritzdüse, optisch abgetastet.

Die Austrittsfläche des Faserstückes 6.5 am Übergang zu der Messfaser 6.7 ist so beschichtet, dass sie die Funktion eines Strahlteilers 6.3 hat. Das Licht wird an diesem Strahlteiler 6.3 in zwei Teilstrahlen aufgeteilt, den Messstrahl und den Referenzstrahl. Der Referenzstrahl wird zurück in das Faserstück 6.5 eingekoppelt und über einen optische Koppler 6.8 am Übergang zwischen dem rotierbaren Sondenteil 6.2 und dem feststehenden Sondenteil 6.1 in das Demodulations-Interferometer 2' geführt. Der Messstrahl wird aus der Messfaser, deren Ende speziell behandelt, z.B. unter einem Winkel von 45° geschliffen und verspiegelt ist, ausgekoppelt und beleuchtet die zu vermessende Innenwand der kleinen Bohrung des Messobjektes 7. Die Messfaser 6.7 hat einen Durchmesser von z.B. 125 µm. Das von der Wand der Bohrung reflektierte Licht wird über die Messfaser 6.7, den Faser-Strahlteiler 6.3' und den optischen Koppler 6.8 in das Demodulations-Interferometer 2' eingekoppelt und mit dem Referenzstrahl überlagert. Die beiden Strahlen können nicht interferieren, da die Kohärenzlänge der Lichtquelle 3 kürzer als die Hälfte der Messfaser 6.7 ist. Das Demodulations-Interferometer 2' ist z.B. nach dem Prinzip eines Mach-Zehnder-Interferometers aufgebaut. In dem Demodulations-Interferometer 2' wird das ankommende Licht auf zwei Teil-Lichtstrahlen aufgeteilt. In einem Arm des Demodulations-Interferometers 2' ist das Verzögerungselement 2.2, z.B. ebenfalls eine planparallele Glasplatte, eingesetzt, das die Differenz der optischen Wege zwischen dem Messstrahl und dem Referenzstrahl, die in dem Messkopf 6.6 erzwungen wurde, zurücksetzt. Die beiden Teil-Lichtstrahlen werden mit Hilfe der Modulatoren 2.1, z.B. ebenfalls akustooptische Modulatoren, gegenseitig in der Frequenz verschoben, wobei die Frequenzdifferenz auch hierbei z.B. einige kHz beträgt. Die beiden interferenzfähigen Teil-Lichtstrahlen werden in einem weiteren Strahlteiler überlagert, ausgekoppelt, mit Hilfe des Spektralelementes 4.2, z.B. einem Gitter oder Prisma, in mehrere spektrale Anteile mit Wellenlängen λ₁, λ₂, ... λₙ zerlegt und auf der Photodetektoranordnung 4.1 fokussiert. Die Auswertung erfolgt dann entsprechend dem Ausführungsbeispiel nach Fig. 1.

Die Informationsübertragung von dem rotierenden Sondenteil 6.2 zu dem feststehenden Sondenteil 6.1 erfolgt über den optischen Koppler 6.8, der z.B. in Form zweier an den Faserenden der entsprechenden Lichtleitfasern 5 angeordneter Grin(= graduade - index -)-Linsen ausgeführt sein kann. Da der optische Koppler 6.8 sich im Lichtweg nach dem Faser-Strahlteiler 6.3' bzw. dem Strahlteiler 6.3 befindet, stören evtl. kleine Verkippungen oder Verschiebungen beider Sondenteile 6.1, 6.2 während der Drehung nicht, so dass durch die Rotation bei der Abtastung keine Verfälschungen des Messergebnisses entstehen.

## Patentansprüche

1. Interferometrische Messvorrichtung zum Messen von Oberflächenkenngrößen, Formen, Abständen, Abstandsänderungen, z.B. Schwingungen, von Messobjekten (7) mit einem Sondenteil (6), **dadurch gekennzeichnet, dass** der Sondenteil (6) in einen feststehenden Sondenteil (6.1) und einen mit diesem mechanisch und optisch gekoppelten rotierbaren Sondenteil (6.2) unterteilt ist und dass ein Strahlteiler (6.3; 6.3') zum Erzeugen eines Referenzstrahls und eines Messstrahls für die interferometrische Messung in dem rotierbaren Sondenteil (6.2) angeordnet ist, wobei der Sondenteil (6) in einem Messkopf (6.6) zum Abtasten des Messobjektes (7) eine optische Messfaser (6.7) aufweist, der ein Faserstück (6.5) vorgeschaltet ist und dass als Strahlteiler (6.3) eine Trennfläche zwischen dem Faserstück (6.5) und der Messfaser (6.7) ausgebildet ist.

2. Messvorrichtung nach Anspruch 1, **dadurch gekennzeichnet, dass** ein von dem Sondenteil (6) räumlich getrenntes Modulationsinterferometer (2) mit darin angeordneter kurzkohärenter Lichtquelle (3) oder räumlich getrenntes Demodulationsinterferometer (2') vorhanden ist, wobei die kurzkohärente Lichtquelle (3) in dem rotierbaren oder in dem feststehenden Sondenteil (6) oder außerhalb des Sondenteils (6) angeordnet ist.

3. Messvorrichtung nach Anspruch 2, **dadurch gekennzeichnet, dass** der Sondenteil (6) und das Modulationsinterferometer (2) oder das Demodulationsinterferometer (2') über eine monomode Lichtleitfaser (5) miteinander gekoppelt sind.

4. Messvorrichtung nach einem der vorhergehenden Ansprüche, **dadurch gekennzeichnet, dass** der Strahlteiler (6.3) Teil einer Common-Path-Interferometeranordnung ist.

5. Messvorrichtung nach einem der vorhergehenden Ansprüche, **dadurch gekennzeichnet, dass** der Aufbau des Interferometers einem klassischen Interferometer, einem Weißlichtinterferometer oder einem Heterodyninterferometer entspricht.

6. Messvorrichtung nach Anspruch 5, **dadurch gekennzeichnet, dass** das Interferometer zur Erweiterung des Messbereiches als Mehrwellenlängeninterferometer ausgebildet ist.

7. Messvorrichtung nach einem der vorhergehenden Ansprüche, **dadurch gekennzeichnet, dass** das Licht der Lichtquelle (3) über eine weitere Lichtleitfaser (6.4) und über einen Faser-Strahlteiler (6.3') in das Faserstück (6.5) geführt und aus diesem nach Beleuchten des Messobjektes (7) in die Lichtleitfaser (5) geleitet wird.

## Claims

1. Interferometric measuring device for measuring surface parameters, shapes, distances, changes in distance, for example vibrations, of measurement objects (7), having a probe part (6),
**characterized**
**in that** the probe part (6) is subdivided into a stationary probe part (6.1) and a rotatable probe part (6.2) mechanically and optically coupled thereto, and in that a beam splitter (6.3; 6.3') for producing a reference beam and a measuring beam for the interferometric measurement is arranged in the rotatable probe part (6.2), wherein in order to scan the measurement object (7) the probe part (6) has in a measuring head (6.6) an optical measuring fibre (6.7) upstream of which there is a fibre piece (6.5), and wherein an interface between the fibre piece (6.5) and the measuring fibre (6.7) is designed as beam splitter (6.3).

2. Measuring device according to Claim 1,
**characterized in that** a modulation interferometer (2) which is spatially separate from the probe part (6) and has a short-coherence light source (3) arranged therein or a spatially separate demodulation interferometer (2') is present, the short-coherence light source (3) being arranged in the rotatable or in the stationary probe part (6) or outside the probe part (6).

3. Measuring device according to Claim 2,
**characterized in that** the probe part (6) and the modulation interferometer (2) or the demodulation interferometer (2') are coupled to one another via a monomode optical fibre (5).

4. Measuring device according to one of the preceding claims,
**characterized in that** the beam splitter (6.3) is part of a common path interferometer arrangement.

5. Measuring device according to one of the preceding claims,
**characterized in that** the design of the interferometer corresponds to a classical interferometer, a white-light interferometer or a heterodyne interferometer.

6. Measuring device according to Claim 5, **characterized in that** the interferometer is designed as a multiwavelength interferometer in order to expand the measurement range.

7. Measuring device according to one of preceding Claims, **characterized in that** the light of the light source (3) is guided via a further optical fibre (6.4) and via a fibre beam splitter (6.3') into the fibre piece (6.5) and is led from the latter into the optical fibre (5) after illuminating the measurement object (7).

## Revendications

1. Dispositif de mesure par interférométrie destiné à mesurer à l'aide d'une partie (6) formant sonde des grandeurs caractéristiques de surface, des formes, des distances, des variations de distance, par exemple des oscillations, d'objets (7) à mesurer, dans lequel la partie (6) formant sonde est divisée en une partie fixe (6.1) de sonde et une partie (6.2) de sonde apte à tourner et couplée mécaniquement et optiquement à la première et dans lequel un diviseur de faisceau (6.3; 6.3') destiné à former un faisceau de référence et un faisceau de mesure pour la mesure par interférométrie est disposé dans la partie rotative (6.2) de la sonde, et dans lequel la partie (6) formant sonde présente dans une tête de mesure (6.6) qui palpe l'objet de mesure (7) une fibre optique de mesure (6.7) en amont de laquelle est raccordé un segment de fibre (6.5) et dans lequel une surface de séparation entre le segment de fibre (6.5) et la fibre de mesure (6.7) est configurée comme division de faisceau (6.3)

2. Dispositif de mesure selon la revendication 1, **caractérisé en ce qu'**il présente un interféromètre (2) à modulation, séparé spatialement de la partie (6) formant sonde et dans lequel sont disposés une source (3) de lumière cohérente à courte longueur d'onde ou un interféromètre (2') àdémodulation séparé spatialement, la source (3) de lumière cohérente de courte longueur d'onde étant disposée dans la partie rotative ou la partie fixe de la sonde (6) ou à l'extérieur de la partie (6) formant la sonde.

3. Dispositif de mesure selon la revendication 2, **caractérisé en ce que** la partie (6) formant la sonde et l'interféromètre (2) à rotation ou l'interféromètre (2') à démodulation sont couplés mutuellement par une fibre monomodale (5) conduisant la lumière.

4. Dispositif de mesure selon l'une des revendications précédentes, **caractérisé en ce que** le diviseur de faisceau (6.3) fait partie d'un ensemble d'interféromètre à parcours commun.

5. Dispositif de mesure selon l'une des revendications précédentes, **caractérisé en ce que** la structure de l'interféromètre correspond à celle d'un interféromètre classique, d'un interféromètre en lumière blanche ou d'un interféromètre hétérodyne.

6. Dispositif de mesure selon la revendication 5, **caractérisé en ce que** l'interféromètre est configuré pour agrandir la plage de mesure en tant qu'interféromètre à plusieurs longueurs d'onde.

7. Dispositif de mesure selon l'une des revendications précédentes, **caractérisé en ce que** la lumière de la source (3) de lumière est amenée dans le segment de fibre (6.5) par une autre fibre (6.4) conduisant la lumière et par un diviseur (6.3') de faisceau de fibre et est extraite de ce segment de fibre pour être amenée dans la fibre (5) conduisant la lumière après avoir éclairé l'objet de mesure (7).
